# EUROPEAN PATENT SPECIFICATION

(11) **EP 2 609 804 B1**
(45) Date of publication and mention of the grant of the patent: **02.03.2016**
(21) Application number: 12199155.8
(22) Date of filing: 21.12.2012
(51) Int. Cl.: A01D 34/71

(54) **Mower unit**
Mäheinheiten
Unité de tondeuse

(30) Priority: 26.12.2011 JP 2011283062
(43) Date of publication of application: 03.07.2013
(73) Proprietor: Iseki & Co., Ltd., Matsuyama-shi, Ehime 799-2692 (JP)
(72) Inventor: Matsugi, Satoshi, Iyo-gun, Ehime 791-2193 (JP); Toda, Hirotaka, Iyo-gun, Ehime 791-2193 (JP)
(74) Representative: Grünecker Patent- und Rechtsanwälte PartG mbB

(56) References cited:
- FR-A1- 2 891 108
- US-A- 4 502 271
- US-A1- 2008 053 056
- US-A1- 2009 266 043

## Description

### BACKGROUND OF THE INVENTION

### Field of the Invention

The present invention relates to a mower unit.

### Related art of the Invention

Conventionally, a riding type mower is know, which has a vehicle body and a rear discharge type mower unit disposed on a front portion of the vehicle body (see, for example, a patent document JP patent no. 4546911, hereinafter referred to as patent document 1. Further, such a mower is known from US 2009/266043 A1 which corresponds to the preamble of claim 1.

In the mower unit of the patent document 1, three pieces of rotating blade, which are rotatable in the same direction, are disposed in inside of a cutting blade housing, and an arc-shaped front guide plate is disposed at a fore side of a rotational locus of a tip portion of each rotating blade and along each rotational locus.

This front guide plate is formed so as to be in a state of protruding downward from a top plate of the cutting blade housing, and so that the protruding length of the front guide plate becomes the same distance from the top plate as the rotating blade possesses.

That is, in the mower unit of the patent document 1, the height of the rotating blade is the same height as the lower end portion of the front guide plate with reference to a height from a ground.

### SUMMARY OF THE INVENTION

### Problems to be Solved by the Invention

However, the grass or lawn which is not mown completely may occur in case of the mower unit of the patent document 1.

In view of the above-mentioned problem of the conventional mower unit, the present invention has an object to provide a mower unit capable of reducing the occurrence of the portion where the grass or lawn is not mown completely.

### MEANS FOR SOLIVING THE PROBLEMS

The 1^{st} aspect of the present invention is a mower unit (2) comprising:
a blade (21, 22, 23) which cuts grass or lawn while rotating; and
a guide (31, 32, 33) which is formed along a rotational locus of the blade,
characterized in that
the guide (31, 32, 33) is disposed at a fore side of the rotational locus of the blade (21, 22, 23), and a lower end position of a part of the guide (31L-31a, 32b-32a, 33b-33a) is constructed more highly than a tip position of the blade (21, 22, 23), the part of the guide (31L-31a, 32b-32a, 33b-33a) corresponding to a first region that is a part of the rotational locus, which exists within such a range from a position where a tip of the blade (21, 22, 23) moves in a progressing direction of the mower unit (2) and in parallel with the progressing direction, to another position where the tip of the blade (21, 22, 23) moves in an orthogonal direction which intersects orthogonally with the progressing direction of the mower unit (2), and
the guide (31, 32, 33) is constructed so that a height of the lower end position of the part of the guide (31 L-31 a, 32b-32a, 33b-33a) becomes low gradually along a rotational direction of the blade.

According to the above described configuration, the mower unit according to the present invention is capable of cutting the grass or lawn precisely.

The 2^{nd} aspect of the present invention is the mower unit according to 1^{st} aspect of the present invention, wherein
the guide (33) is constructed so that a height of a lower end position of another part of the guide (33a-33R) is same or substantially same along the rotational direction of the blade (23), said another part of the guide (33a-33R) corresponding to a second region that is another part of the rotational locus, which exists within such a range from a position where the tip of the blade (23) moves in the orthogonal direction, to another position where the tip of the blade (23) moves in an opposite direction to the progressing direction of the mower unit (2).

According to the above described configuration, the mower unit according to the present invention is capable of reducing the occurrence of the grass or lawn which passes through the neighborhood of the region that corresponds to the rotational locus of the blade moving in an opposite direction to the progressing direction of mower unit to be not mown completely.

The 3^{rd} aspect of the present invention is the mower unit according to 2^{nd} aspect of the present invention, wherein
a set of the blade (23) and the guide (33) is provided in a right side end of the mower unit (2), and two or more sets of other blade (21, 22) and other guide (31, 32) are provided in a left side of the guide (33) provided in the right side end, and the sets adjoin in a transverse direction to the progressing direction of the mower unit (2), and
all of the other guides (31, 32) except for the guide (33) provided in the right side end are disposed at fore sides of the rotational locus of the other blades (21, 22), and i) are constructed so that a height of a lower end position of a part of each one of the other guides (31 L-31a, 32b-32a) becomes low gradually along each rotational direction of the other blades (21, 22), the part of each one of the other guides (31L-31a, 32b-32a) corresponding to the first region of the rotational locus, and ii) are constructed so that a height of a lower end position of another part of each one of the other guides (31a-31b, 32a-32c) becomes high gradually along each rotational direction of the other blades (21, 22), said another part of each one of the other guides (31a-31b, 32a-32c) corresponding to the second region of the rotational locus.

According to the above described configuration, the mower unit according to the present invention is capable of reducing the occurrence of the grass or lawn which passes through the neighborhood between the blades to be not mown completely.

The 4^{th} aspect of the present invention is the mower unit according to 1^{st} aspect of the present invention, wherein
three or more sets of the blade (21, 22, 23) and the guide (31, 32, 33) are provided, and the sets adjoin in a transverse direction to the progressing direction of the mower unit (2), and
all of the guides (31, 32) except for a right side end guide (33) are constructed so that a height of a lower end position of another part of the each guide (31a-31 b, 32a-32c) becomes high gradually along the rotational direction of the blade, said another part of the each guide (31 a-31 b, 32a-32c) corresponding to a second region that is another part of the rotational locus, which exists within such a range from a position where the tip of the blade (21, 22) moves in the orthogonal direction, to another position where the tip of the blade (21, 22) moves in an opposite direction to the progressing direction of the mower unit (2).

According to the above described configuration, the mower unit according to the present invention is capable of reducing the occurrence of the grass or lawn which passes through the neighborhood between the blades to be not mown completely.

### ADVANTAGEOUS EFFECTS OF INVENTION

According to the present invention, it is possible to provide a mower unit capable of reducing the occurrence of the grass or lawn which is not mown completely.

### BRIEF DESCRIPTION OF THE DRAWINGS

FIG. 1 is a left side view of a mower according to Embodiment 1 of the present invention;
FIG. 2 is a plan view of the mower according to Embodiment 1 of the present invention;
FIG. 3A is a plan view of a mower unit according to Embodiment 1 of the present invention;
FIG. 3B is a rear side view of the mower unit according to Embodiment 1 of the present invention;
FIG. 3C is a left side view of the mower unit according to Embodiment 1 of the present invention;
FIG. 4 is a bottom view of the mower unit according to Embodiment 1 of the present invention;
FIG. 5 is a schematic perspective view seen from the bottom side of the mower unit according to Embodiment 1 of the present invention;
FIG. 6A is a plan view which shows a state where a belt cover is removed from the mower unit according to Embodiment 1 of the present invention;
FIG. 6B is a left side view of FIG. 6A;
FIG. 7A is a plan view showing a configuration of front guides of the mower unit according to Embodiment 1 of the present invention;
FIG. 7B is a rear side view of FIG. 7A;
FIG. 7C is a left side view of FIG. 7A;
FIG. 8A is a plan view showing a configuration of front guides and rotating blades of the mower unit according to Embodiment 1 of the present invention;
FIG. 8B is a rear side view of FIG. 8A;
FIG. 8C is a left side view of FIG. 8A;
FIG. 9A is a plan view showing a configuration of a first front guide of the mower unit according to Embodiment 1 of the present invention;
FIG. 9B is a rear side view of FIG. 9A;
FIG. 10A is a plan view showing a configuration of a second front guide of the mower unit according to Embodiment 1 of the present invention;
FIG. 10B is a rear side view of FIG. 10A;
FIG. 11A is a plan view showing a configuration of a third front guide of the mower unit according to Embodiment 1 of the present invention;
FIG. 11B is a rear side view of FIG. 11A;
FIG. 12 is a development view of the first front guide, the second front guide, and the third front guide of the mower unit according to Embodiment 1 of the present invention;
FIGS. 13A-13D are schematic views showing position relations between each part of the front guides and the rotating blade in the vertical direction;
FIGS. 14A-14B are development views of the first front guide, the second front guide, and the third front guide of modified examples of the mower unit according to Embodiment 1 of the present invention;
FIGS. 15A is a perspective view showing another example of an inside rear roller of the mower unit according to Embodiment 1 of the present invention;
FIGS. 15B is a perspective view showing a configuration in which another example of the inside rear roller shown in FIG. 15A is fixed to a mower deck according to Embodiment 1 of the present invention;
FIG. 16A is a plan view showing a configuration of a front center roller of the mower unit according to Embodiment 1 of the present invention;
FIG. 16B is a plan view showing a modified example of the configuration of a front center roller of the mower unit according to Embodiment 1 of the present invention;
FIG. 16C is a plan view showing another modified example of the configuration of a front center roller of the mower unit according to Embodiment 1 of the present invention;
FIG. 17 is a bottom view showing detachable guides of the mower unit according to Embodiment 1 of the present invention;
FIG. 18 is a bottom view showing a modified example of the detachable guides of the mower unit according to Embodiment 1 of the present invention;
FIG. 19 is a bottom view showing another modified example of the detachable guides of the mower unit according to Embodiment 1 of the present invention;
FIG. 20 is a bottom view showing still another modified example of the detachable guides of the mower unit according to Embodiment 1 of the present invention; and
FIG. 21 is a bottom view showing further another modified example of the guides of the mower unit according to Embodiment 1 of the present invention.

### Description of Symbols

- 1: Vehicle body
- 2: Mower unit
- 3: Front wheel
- 4: Rear wheel
- 5: Engine
- 6: Step floor
- 7: Driver's seat
- 8: Steering post
- 9: Steering wheel
- 10: Transmission case
- 11: Link mechanism
- 12: Drive force-transmitting shaft
- 20: Mower deck
- 21: First rotating blade
- 22: Second rotating blade
- 23: Third rotating blade
- 24: Belt cover
- 25: Front center roller
- 26: Contact gauge wheel
- 27: Rear corner roller
- 28: Inside rear roller
- 29: Protector
- 31: First front guide
- 32: Second front guide
- 33: Third front guide
- 31a: Foremost part of first front guide
- 32a: Foremost part of second front guide
- 33a: Foremost part of third front guide
- 31b: First position of first front guide
- 32b: First position of second front guide
- 33b: First position of third front guide
- 32c: Second position of second front guide
- 31R: First front guide right end
- 31L: First front guide left end
- 32R: Second front guide right end
- 32L: Second front guide left end
- 33R: Third front guide right end
- 33L: Third front guide left end
- 34: Curved shape-guide
- 35: First inclined guide
- 36: Second inclined guide
- 37, 38, 39: Pulley
- 41: First position
- 42: Second position
- 43: Third position
- 45: Bracket
- 45a: Front side
- 46: Sloping bracket
- 46a: Slope .
- 50: First liner guide
- 51: Second liner guide
- 52: Left rear part guide
- 53: Right rear part guide
- 54: Third inclined guide
- 55: Fourth inclined guide
- 56: Fifth inclined guide
- 57: Sixth inclined guide
- 58: Seventh inclined guide
- 59: Eighth inclined guide
- 60: Ninth inclined guide
- 61: Tenth inclined guide

### PREFERRED EMBODIMENTS OF THE INVENTION

Hereinafter, a riding type mower in accordance with an embodiment of the present invention will be described with reference to the drawings.

### (Embodiment 1)

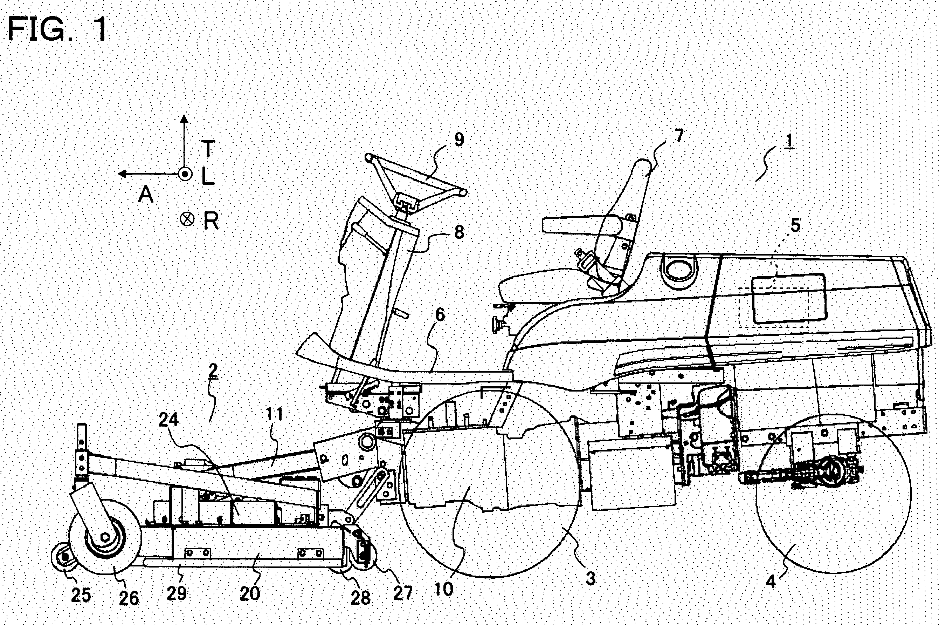

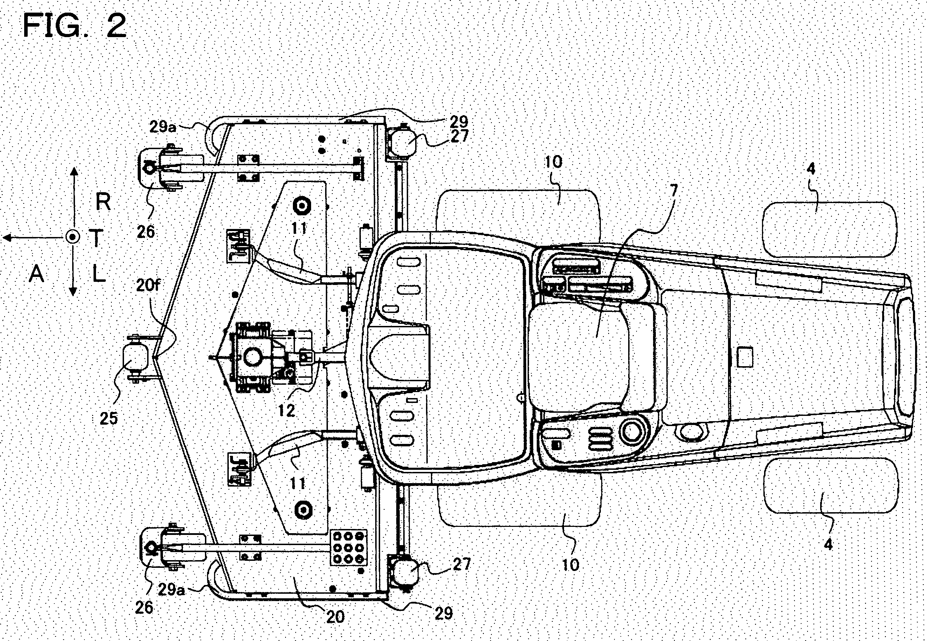

FIG. 1 is a left side view of a mower according to Embodiment 1 of the present invention. FIG. 2 is a plan view of the mower according to Embodiment 1 of the present invention. Then, herein, a front direction corresponds to a direction of movement of the mower when grass or lawn is mowed (see the arrow A), a left direction corresponds to a direction of a driver's left hand when the driver rides on the mower and look at the direction of the movement of the mower (see the arrow L), and a right direction corresponds to a direction of a driver's right hand when the driver rides on the mower and look at the direction of the movement of the mower (see the arrow R). Further, a upward direction is denoted with an arrow T. The same applies to the following drawings.

As shown in FIGS. 1 and 2, the mower of the present Embodiment 1 is a riding type mower, is provided with a vehicle body 1 on which the driver rides and a rear discharge type mower unit 2 which is connected to the fore side of the vehicle body 1. The vehicle body 1 is provided with a pair of left and right front wheels 3, and a pair of left and right rear wheels 4. A rear portion of the vehicle body 1 is provided with an engine 5. A front portion of the vehicle body 1 is provided with a step floor 6, and a upper portion of the step floor 6 is provided with a driver's seat 7. A forward portion of the driver's seat 7 is provided with a steering post 8, and a upper portion of the steering post 8 is provided with a steering wheel 9.

A transmission case 10 is provided below the steering post 8, a mower unit 2 is connected to the transmission case 10 via a link mechanism 11. A drive force-transmitting shaft 12, which transmits drive force from the engine 5 is transmitted from the transmission case 10 to the mower unit 2, is provided (see FIG. 2).

Next, the mower unit 2 in accordance with the present embodiment will be described.

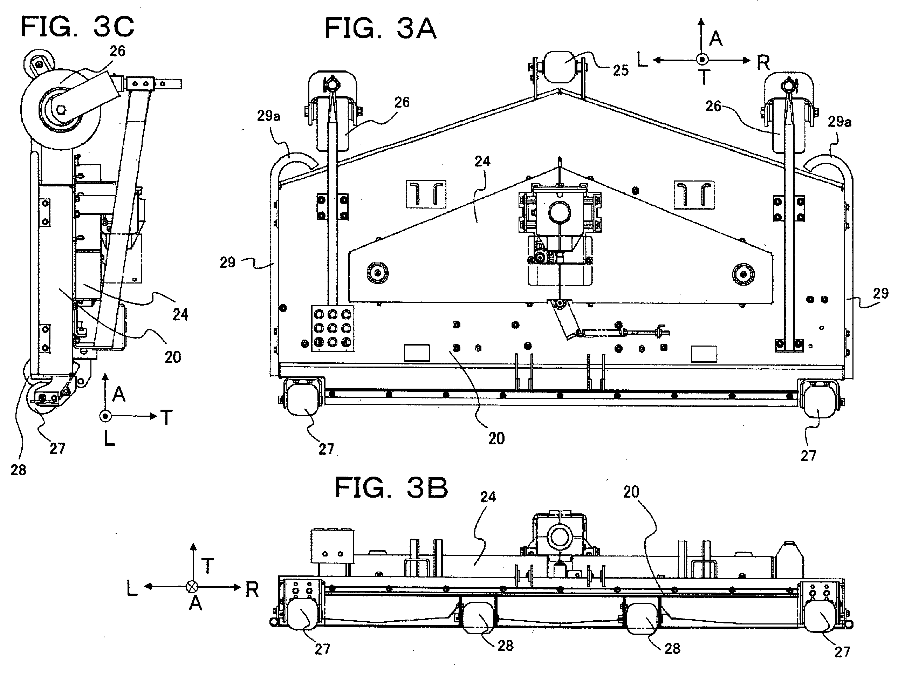

FIG. 3A is a plan view of the mower unit 2 according to the present embodiment, FIG. 3B is a rear side view of the mower unit 2 according to the present embodiment, and FIG. 3C is a left side view of the mower unit 2 according to the present embodiment.

The mower unit 2 is provided with i) a first rotating blade 21, a second rotating blade 22, and a third rotating blade 23 (which are described later in detail), ii) a mower deck 20 which accommodates these rotating blades, iii) a transmission belt 40 (that is described later), which is provided in an upper portion of the mower deck 2 and transmits drive force from the drive force-transmitting shaft 12 to the three rotating blades, and iv) a belt cover 24 which covers the transmission belt 40. Further, a front center roller 25 is provided at the front side center portion of the mower deck 20, contact gauge wheels 26 are provided respectively at the left and right sides of the front side of the mower deck 20. Further more, rear corner rollers 27 are provided at the left and right corners of the rear side of the mower deck 20, a pair of left and right inside rear rollers 28 are provided between these two rear corner rollers 27, too. Protectors 29 which protect the mower deck 20 are provided at the left and right sides of the mower deck 20 respectively. As shown in FIGS. 1 and 2, these protectors 29 are pipe-like members disposed in fore and aft direction of the mower deck 20 and formed so that each front part 29a thereof curves to an inner side with respect to the horizontal direction.

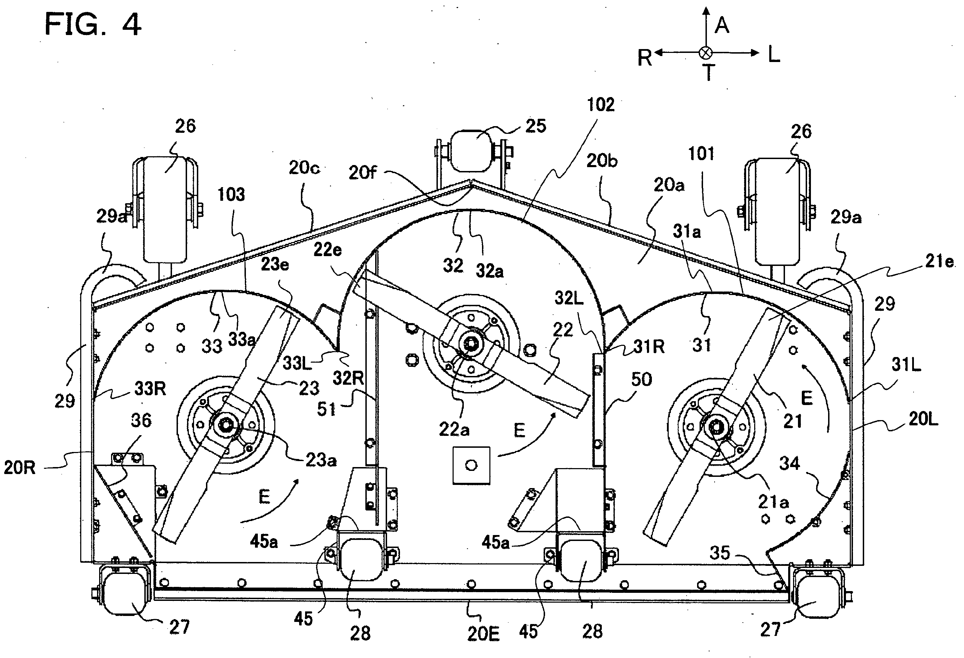

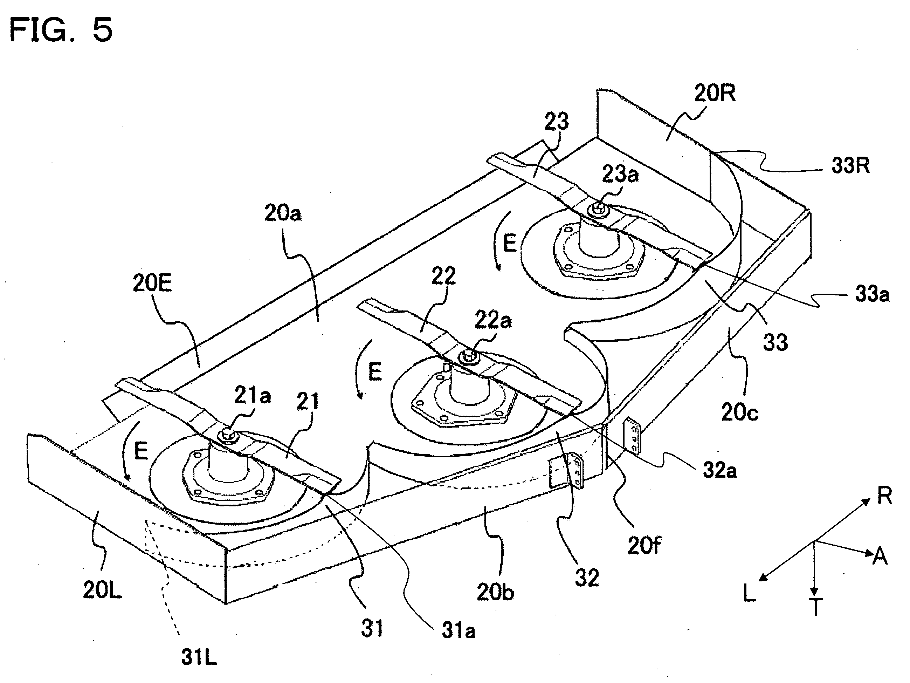

FIG. 4 is a bottom view of the mower unit 2 according to the present embodiment. FIG. 5 is a schematic perspective view seen from the bottom side of the mower deck 20, and the configurations other than the front guides and the rotating blades, which are described below, are omitted.

As shown in FIGS. 4 and 5, the first rotating blade 21, the second rotating blade 22, and the third rotating blade 23 are disposed in order in the direction which goes toward the right side from the left side of the mower unit 2. The mower deck 20 is provided with a top plate 20a having a pentagon-shape in plan view, which has a side that is located in the rear side thereof and extends in the left-and-right direction, two sides that are extend from the both end portions of the side in the fore-and aft direction, and two sides that are extend from each front end portion of the two sides to the center portion while inclining and are connected each other at a front end portion 20f.

The mower deck 20 is formed so as to cover the three rotating blades. The mower deck 20 has the top plate 20a, a front left wall part 20b that extends downward from the left side of the two sides of the front side of the top plate 20a, a front right wall part 20c that extends downward from the right side of the two sides of the front side of the top plate 20a, a left wall part 20L that extends downward from the left side of the top plate 20a, a right wall part 20R that extends downward from the right side of the top plate 20a, and a rear end part 20E that extends backward while inclining downward from the rear side of the top plate 20a.

A first front guide 31 having an arc-shape is formed, at the front side of the first rotating blade 21, along a rotational locus of a tip 21e of the first rotating blade 21 so as to protrude downward from the top plate 20a. A second front guide 32 having an arc-shape is formed, at the front side of the second rotating blade 22, along a rotational locus of a tip 22e of the second rotating blade 22 so as to protrude downward from the top plate 20a. And a third front guide 33 having an arc-shape is formed, at the front side of the third rotating blade 23, along a rotational locus of a tip 23e of the third rotating blade 23 so as to protrude downward from the top plate 20a.

Here, as shown in FIG. 4, a first front guide left end 31L denotes a left side end portion of the first front guide 31, and a first front guide right end 31R denotes a right side end portion of the first front guide 31. A second front guide left end 32L denotes a left side end portion of the second front guide 32, and a second front guide right end 32R denotes a right side end portion of the second front guide 32. A third front guide left end 33L denotes a left side end portion of the third front guide 33, and a third front guide right end 33R denotes a right side end portion of the third front guide 33.

The first front guide right end 31R and the second front guide left end 32L adjoin, and the second front guide right end 32R and the third front guide left end 33L adjoin. Details will be described later.

As shown in FIG. 4, a curved shape-guide 34 is formed at the left rear side of the first front guide 31 so as to protrude downward from the top plate 20a, and a first inclined guide 35 is formed toward the left rear side of the curved shape-guide 34 from a rear end part of the curved shape-guide 34 so as to protrude downward from the top plate 20a. A second inclined guide 36 is formed, at the right rear side of the third front guide 33, toward a left rear side of the right wall part 20R of the mower deck 20 from an inside of the right wall part 20R of the mower deck 20 so as to protrude downward from the top plate 20a. A first liner guide 50 is formed in the fore-and-aft direction of the mower unit 2 from the adjoined portion where the first front guide right end 31 R and the second front guide left end 32L adjoin so as to protrude downward from the top plate 20a. A second liner guide 51 is formed in the fore-and-aft direction from a position between a foremost part (which will be described later by using a reference numeral 32a) of the second front guide 32 and the second front guide right end 32R so as to protrude downward from the top plate 20a.

A first guide 101 in the neighborhood of the first rotating blade 21 is made of the above mentioned first front guide 31, the curved shape-guide 34, and the first inclined guide 35. A second guide 102 in the neighborhood of the second rotating blade 22 is made of the above mentioned second front guide 32, the first liner guide 50, and the second liner guide 51. A third guide 103 in the neighborhood of the third rotating blade 23 is made of the above mentioned third front guide 33, and the second inclined guide 36.

As shown in FIG. 4, the first rotating blade 21, the second rotating blade 22 and the third rotating blade 23 are rotated about a first rotating shaft 21 a, a second rotating shaft 22a, and a third rotating shaft 23a in the same rotational direction (see arrow E direction), respectively.

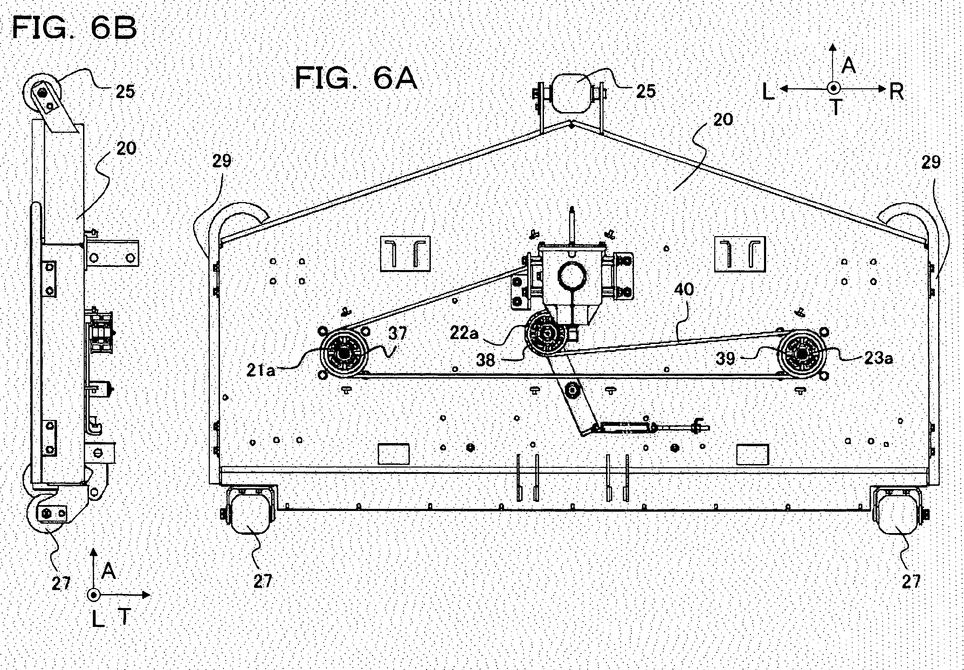

FIG. 6A is a plan view which shows a state where a belt cover 24 is removed from the mower unit 2 according to the present embodiment. FIG. 6B is a left side view of FIG. 6A. As shown in FIGS. 6A and 6B, the first rotating shaft 21a, the second rotating shaft 22a, and the third rotating shaft 23a are provided with a first pulley 37, a second pulley 38, and a third pulley 39, respectively. The transmission belt 40 is laid along the first pulley 37, the second pulley 38, and the third pulley 39 to transmit the drive force from the drive force-transmitting shaft 12 to the three rotating blades.

Next, the configuration of the first front guide 31, the second front guide 32, and the third front guide 33 will be described below in detail.

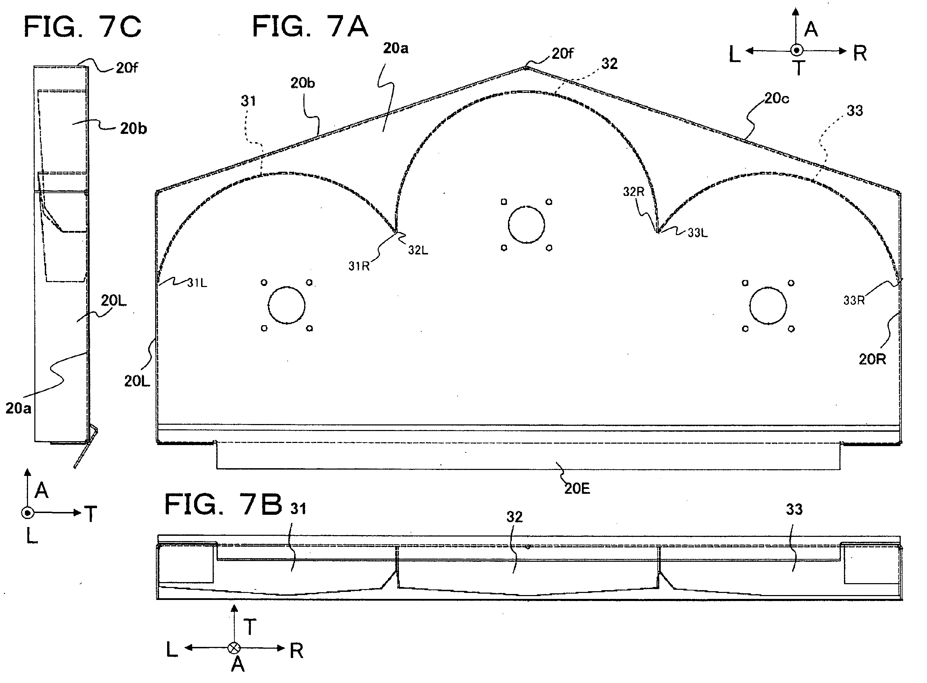

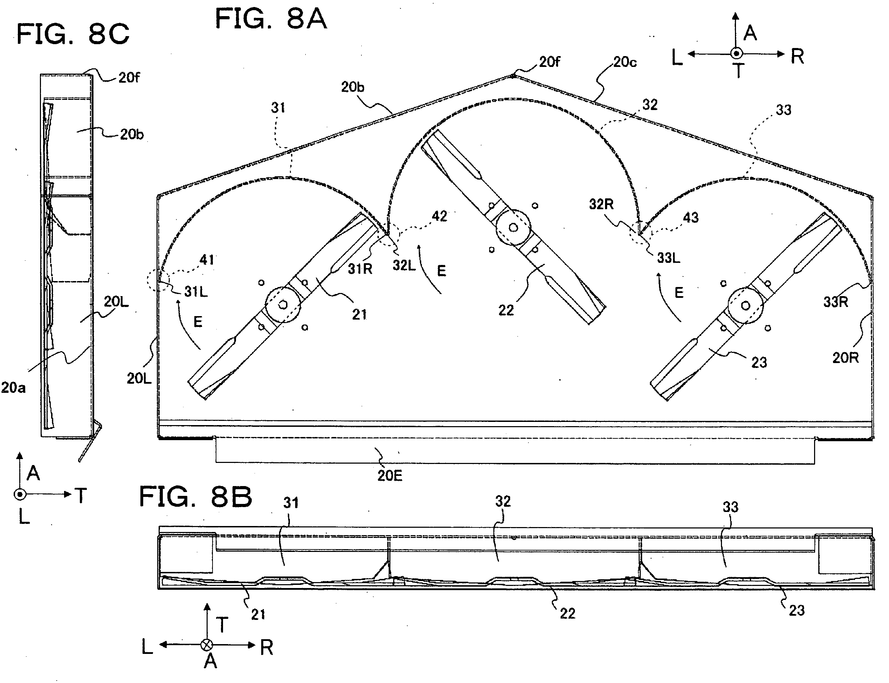

FIG. 7A is a plan view of the mower unit 2 according to the present embodiment, and only the front guides are shown in FIG. 7A for making the explanation intelligible. FIG. 7B is a rear side view of FIG. 7A, and FIG. 7C is a left side view of FIG. 7A. FIG. 8A is a plan view showing a configuration of front guides and rotating blades of the mower unit 2 according to the present embodiment, and FIG. 8B is a rear side view of FIG. 8A, and FIG. 8C is a left side view of FIG. 8A.

As shown in FIGS. 7 and 8, the first front guide 31, the second front guide 32, and the third front guide 33 are formed in the shape of an arc. The first front guide left end 31L is in contact with the inside of the left wall part 20L of the mower deck 20. The first front guide right end 31R is in contact with the second front guide left end 32L. The second front guide right end 32R is in contact with the third front guide left end 33L. The third front guide right end 33R is in contact with the inside of the right wall part 20R of the mower deck 20.

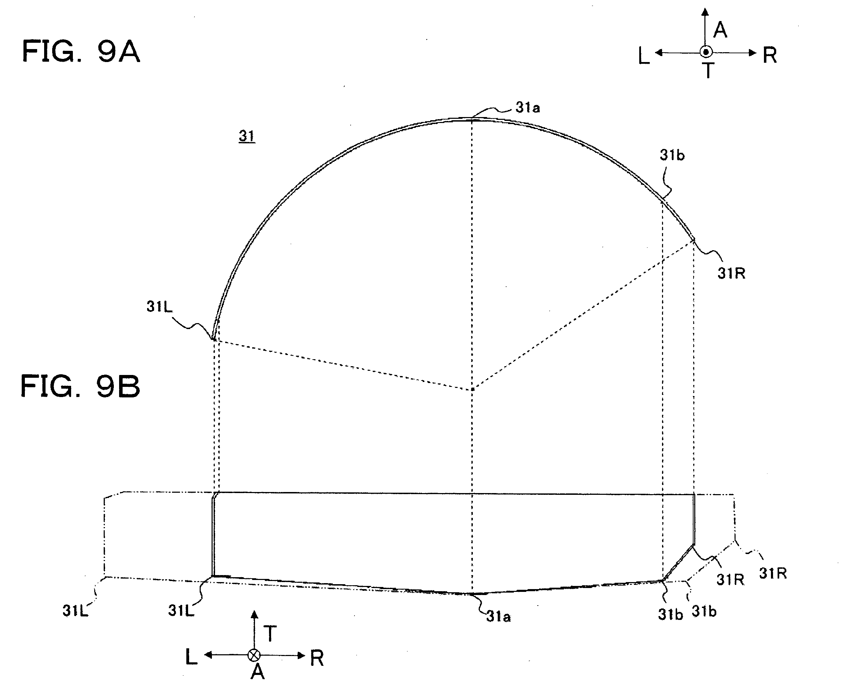

FIG. 9A is a plan view of the first front guide 31, and FIG. 9B is a rear side view of the first front guide 31. In FIG. 9B, the portion expressed using the two-dot chain line is a developed view of the first front guide 31 shown in FIG. 9B.

A foremost part of first front guide 31a denotes a portion which is located at the foremost side of the first front guide 31 having the arc-shape. As shown in FIGS. 9A and 9B, the first front guide 31 is formed so that the length of the arc part extended to the left side (the left wall part 20L) from the foremost part of first front guide 31a becomes longer than the length of the arc part extended to the right side (the right wall part 20R) from the foremost part of first front guide 31a. The first front guide 31 is formed so that the protruding distance, which has protruded from the top plate 20a with respect to the portion between the foremost part of first front guide 31a and the first front guide left end 31L, becomes short gradually along an opposite direction to the rotational direction of the first rotating blade 21 (In other words, a height from a virtual plane (for example, the ground) (not shown) existing at a position which has a predetermined distance toward the ground from a top plate 20a, becomes high gradually along the opposite direction to the rotational direction of the first rotating blade 21.). Further, the first front guide 31 is formed so that the protruding distance, which has protruded from the top plate 20a with respect to the portion between the foremost part of first front guide 31a and the first position of first front guide 31b that is close to a first front guide right end 31 R, becomes short gradually and gently along the rotational direction of the first rotating blade 21 (In other words, a height from the above described virtual plane becomes high gradually and gently along the rotational direction of the first rotating blade 21.). A protruding distance, which has protruded from the top plate 20a with respect to the portion between the first position of first front guide 31b and the first front guide right end 31R, becomes short suddenly along the rotational direction of the first rotating blade 21 (In other words, a height from the above described virtual plane becomes high suddenly along the rotational direction of the first rotating blade 21.).

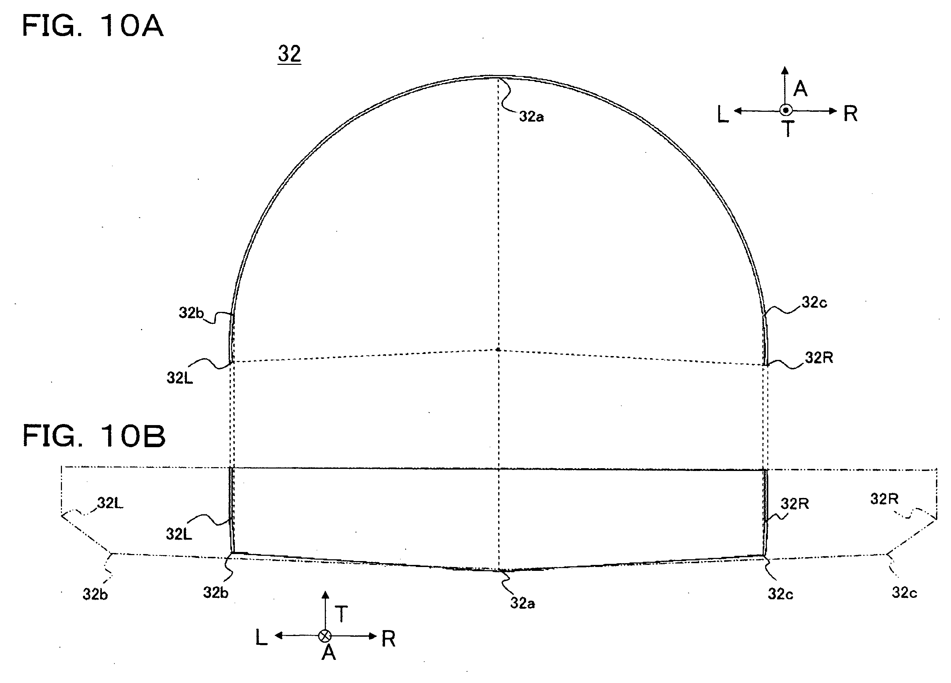

FIG. 10A is a plan view of the second front guide 32, and FIG. 10B is a rear side view of the second front guide 32. In FIG. 10B, the portion expressed using the two-dot chain line is a developed view of the second front guide 32 shown in FIG. 10B.

The foremost part of second front guide 32a denotes a portion which is located at the foremost side of the second front guide 32 having the arc-shape. As shown in FIGS. 10A and 10B, the second front guide 32 is formed so that the length of the arc part extended to the left side (the left wall part 20L) from the foremost part of second front guide 32a becomes equal to the length of the arc part extended to the right side (the right wall part 20R) from the foremost part of second front guide 32a. The second front guide 32 is formed so that the protruding distance, which has protruded from the top plate 20a with respect to the portion between the foremost part of second front guide 32a and a first position of second front guide 32b that is close to the second front guide left end 32L, becomes short gradually and gently along the opposite direction to the rotational direction of the second rotating blade 22 (In other words, a height from the above described virtual plane becomes high gradually and gently along the opposite direction to the rotational direction of the second rotating blade 22.). A protruding distance, which has protruded from the top plate 20a with respect to the portion between the first position of second front guide 32b and the second front guide left end 32L, becomes short suddenly along the opposite direction to the rotational direction of the second rotating blade 22 (In other words, a height from the above described virtual plane becomes high suddenly along the opposite direction to the rotational direction of the second rotating blade 22.). Further, the second front guide 32 is formed so that the protruding distance, which has protruded from the top plate 20a with respect to the portion between the foremost part of second front guide 32a and a second position of second front guide 32c that is close to the second front guide right end 32R, becomes short gradually and gently along the rotational direction of the second rotating blade 22 (In other words, a height from the above described virtual plane becomes high gradually and gently along the rotational direction of the second rotating blade 22.). A protruding distance, which has protruded from the top plate 20a with respect to the portion between the second position of second front guide 32c and the second front guide right end 32R, becomes short suddenly along the rotational direction of the second rotating blade 22 (In other words, a height from the above described virtual plane becomes high suddenly along the rotational direction of the second rotating blade 22.).

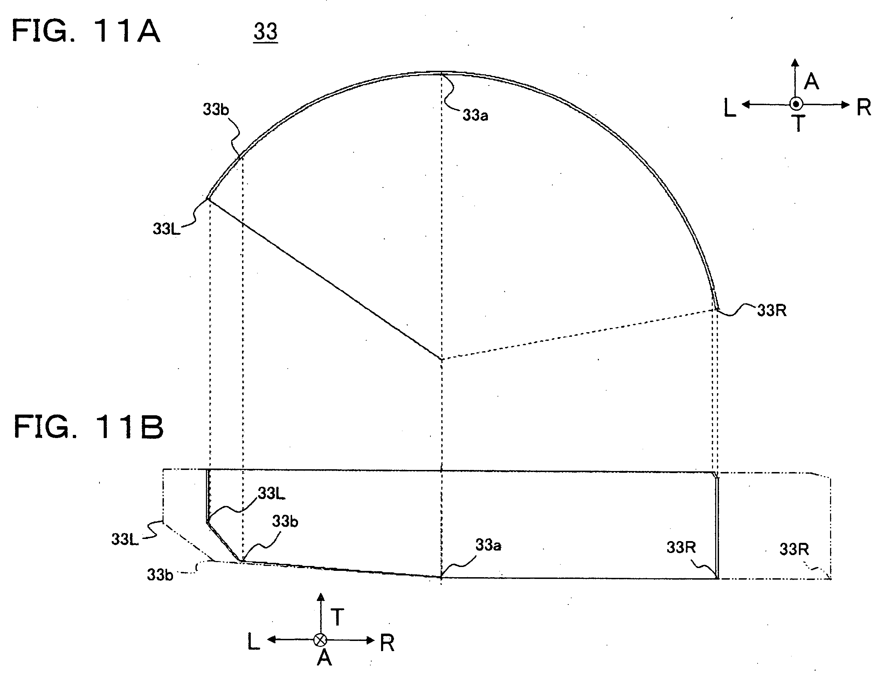

FIG. 11A is a plan view of the third front guide 33, and FIG. 11B is a rear side view of the third front guide 33. In FIG. 11B, the portion expressed using the two-dot chain line is a developed view of the third front guide 33 shown in FIG. 11B.

A foremost part of third front guide 33a denotes a portion which is located at the foremost side of the third front guide 33 having the arc-shape. As shown in FIGS. 11A and 11B, the third front guide 33 is formed so that the length of the arc part extended to the right side (the right wall part 20R) from the foremost part of third front guide 33a becomes longer than the length of the arc part extended to the left side (the left wall part 20L) from the foremost part of third front guide 33a. The third front guide 33 is formed so that the protruding distance, which has protruded from the top plate 20a with respect to the portion between the foremost part of third front guide 33a and a first position of third front guide 33b that is close to the third front guide left end 33L, becomes short gradually and gently along an opposite direction to the rotational direction of the third rotating blade 23 (In other words, a height from the above described virtual plane becomes high gradually and gently along the opposite direction to the rotational direction of the third rotating blade 23.). A protruding distance, which has protruded from the top plate 20a with respect to the portion between the first position of third front guide 33b and the third front guide left end 33L, becomes short suddenly along the opposite direction to the rotational direction of the third rotating blade 23 (In other words, a height from the above described virtual plane becomes high suddenly along the opposite direction to the rotational direction of the third rotating blade 23.). Further, the third front guide 33 is formed so that the protruding distance, which has protruded from the top plate 20a with respect to the portion between the foremost part of third front guide 33a and the third front guide right end 33R, becomes the same. Incidentally, it is not necessary that the protruding distance, which has protruded from the top plate 20a with respect to the portion between the foremost part of third front guide 33a and the third front guide right end 33R, is the same distance strictly. For example, one part may be a little longer or shorter than another part.

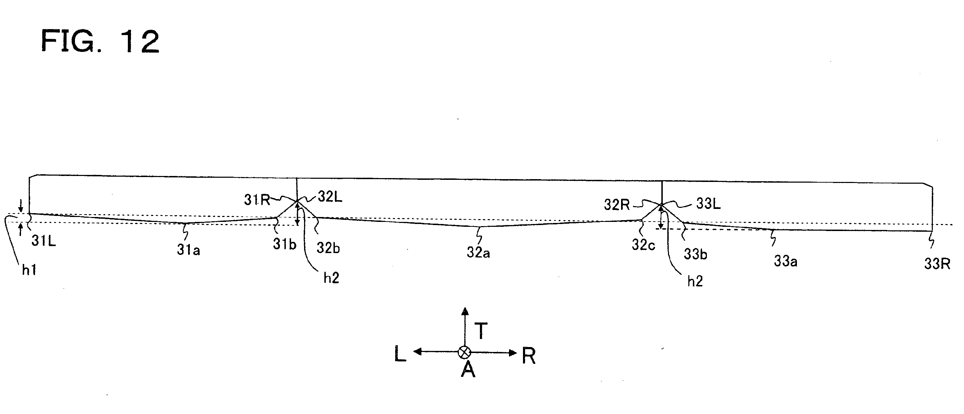

FIG. 12 is a development view of a state where the first front guide 31, the second front guide 32, and the third front guide 33 are connected.

As shown in FIG. 12, each distance (or the protruding distance), which has protruded from the top plate 20a with respect to each one of the foremost end of first front guide 31a, the foremost part of second front guide 32a, and foremost end of third front guide 33a, is the same. Further, with respect to each one of the first front guide right end 31 R, the second front guide left end 32L, the second front guide right end 32R, and the third front guide left end 33L, each distance, which has protruded from the top plate 20a, is the same.

The protruding distance of the first front guide left end 31 L is set so as to become short about 20 mm compared with the protruding distance which has protruded from the top plate 20a with respect to the foremost part of first front guide 31a (see the reference numeral h1 shown in FIG. 12). In other words, the first front guide left end 31L is formed so as to become closer to the top plate 20a than the foremost part of first front guide 31 a. Each protruding distance of the first front guide right end 31 R, the second front guide left end 32L, the second front guide right end 32R, and the third front guide left end 33L is set so as to become short about 60 mm compared with each protruding distance which has protruded from the top plate 20a with respect to each one of the foremost end of first front guide 31 a, the foremost part of second front guide 32a, and foremost end of third front guide 33a (see the reference numeral h2 shown in FIG. 12).

As shown in FIG. 8B, each distance from the top plate 20a with respect to each one of the first rotating blade 21, the second rotating blade 22, and the third rotating blade 23, is set so as to be the same. Each one of the first liner guide 50 and the second liner guide 51 (see FIG. 4) is formed so that its protruding distance from the top plate 20a becomes shorter than each distance from the top plate 20a with respect to each one of the first rotating blade 21, the second rotating blade 22, and the third rotating blade 23.

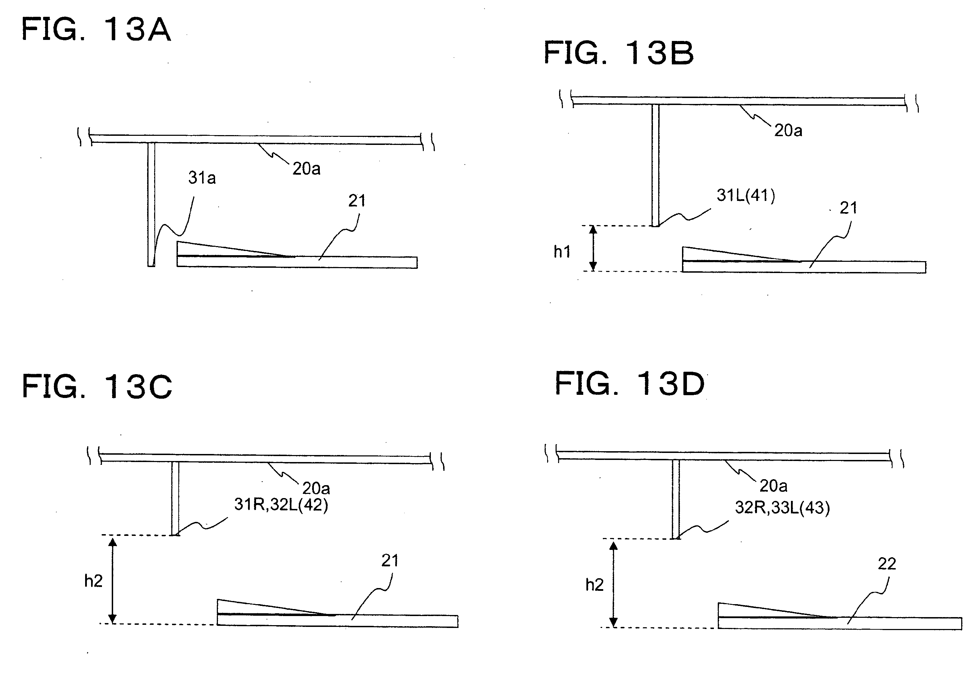

FIGS. 13A-13D are schematic views showing position relations between each part of the front guides and the rotating blade in the vertical direction.

FIG.13A shows only the position relation between the lower end position of the foremost part of first front guide 31a and the first rotating blade 21. However, each lower end position of the foremost part of first front guide 31 a, the foremost part of second front guide 32a, and the foremost part of third front guide 33a is substantially the same as each one of the first rotating blade 21, the second rotating blade 22, and the third rotating blade 23.

That is, each height from the ground with respect to the first rotating blade 21, the second rotating blade 22, and the third rotating blade 23 is substantially the same as each height from the ground with respect to each lower end position of the foremost part of first front guide 31a, the foremost part of second front guide 32a, and the foremost part of third front guide 33a.

Therefore, each protruding distance of the front guides, which has protruded from the top plate 20a with respect to the first front guide left end 31 L, the first front guide right end 31 R, the second front guide left end 32L, the second front guide right end 32R, the third front guide left end 33L, that is, with respect to a first position 41, a second position 42, and a third position 43 shown in FIG. 8, is shorter than each distance from the top plate 20a with respect to the first rotating blade 21, the second rotating blade 22, and the third rotating blade 23. FIG. 13B shows the position relation between the lower end position of the first front guide left end 31L (the first position 41) and the first rotating blade 21. FIG. 13C shows the position relation among the lower end position of the first front guide right end 31 R, the lower end position of the second front guide left end 32L (the second position 42), and the first rotating blade 21. FIG. 13D shows the position relation among the lower end position of the second front guide right end 32R, the lower end position of the third front guide left end 33L (the third position 43), and the second rotating blade 22.

That is, the height from the ground with respect to the lower end position of the front guide at the first position 41 is higher by distance h1 than the height from the ground with respect to the first rotating blade 21 and the second rotating blade 22 (see FIG. 13B). The each height from the ground with respect to each lower end position of the front guide at the second position 42 and the third position 43 is higher by distance h2 than each height from the ground with respect to the first rotating blade 21, the second rotating blade 22, and the third rotating blade 23 (see FIGS. 13C and 13D).

By the way, an example of a blade according to the present invention corresponds to each one of the first rotating blade 21, the second rotating blade 22, and the third rotating blade 23 of the present embodiment. An example of a guide according to the present invention corresponds to each one of the first front guide 31, the second front guide 32, and the third front guide 33 of the present embodiment.

Further, an example of "a first region that is a part of the rotational locus" according to the present invention corresponds to a left-semiarc range that constitutes a left half of each rotational region of the tip of the first rotating blade 21, the second rotating blade 22, and the third rotating blade 23 according to the present embodiment.

An example of "the part of the guide (31L-31a, 32b-32a, 33b-33a) corresponding to a first region" according to the present invention corresponds to i) the portion between the first front guide left end 31L and the foremost part of first front guide 31a with respect to the first front guide 31, ii) the portion between the first position of second front guide 32b and the foremost part of second front guide 32a with respect to the second front guide 32, and iii) the portion between the first position of third front guide 33b and the foremost part of third front guide 33a with respect to the third front guide 33 according to the present embodiment.

An example of "a height of the lower end position of the part of the guide (31L-31a, 32b-32a, 33b-33a)" according to the present invention corresponds to each height from the ground with respect to each lower end position of i) the portion between the first front guide left end 31L and the foremost part of first front guide 31a with respect to the first front guide 31, ii) the portion between the first position of second front guide 32b and the foremost part of second front guide 32a with respect to the second front guide 32, and iii) the portion between the first position of third front guide 33b and the foremost part of third front guide 33a with respect to the third front guide 33 according to the present embodiment.

An example of "a second region that is another part of the rotational locus" according to the present invention corresponds to a left-semiarc range that constitutes a left half of rotational region of the tip of the third rotating blade 23 according to the present embodiment.

An example of "said another part of the guide(33a-33R) corresponding to a second region" according to the present invention corresponds to the portion between the foremost part of third front guide 33a and the third front guide right end 33R with respect to the third front guide 33 according to the present embodiment.

The mower according to the present embodiment is capable of cutting the grass or lawn by moving the vehicle body 1 in the progressing direction while rotating the first rotating blade 21, the second rotating blade 22, and the third rotating blade 23.

In case of conventional mower unit, since all height from the ground with respect to each front guide is the same as the height from the ground with respect to each rotating blade, there was a case where the grass or lawn, which was not mown completely, occurred at the positions of the first position 41, the second position 42, and the third position 43. On the contrary, there was no case where the grass or lawn, which was not mown completely, occurred at the position of the third front guide right end 33R.

By the way, when the conventional mower unit is explained herein, the same reference numerals as those of the mower unit 2 according to the present embodiment are used in order to only be able to understand the explanation easily. However, it should be understood that using the same reference numerals does not mean that the conventional mower is provided with the subject matter of the mower unit according to the present invention.

Here, the reason why the grass or lawn, which is not mown completely, occurs at the position of the first position 41 can be considered as follows. That is, since the first position 41 is the position where the tip of the first rotating blade 21 approaches from rearward, at the position of the first position 41, it is difficult to cut the grass or lawn which has been pushed down forward by the front guide. At this point, the situation is different between the position of the first position 41 and the position of the third front guide right end 33R. Further, since each of the second position 42 and the third position 43 exists in a gap portion which occurs between the rotating blade approaching from forward and the rotating blade approaching from rearward, it is difficult to cut the grass or lawn which has been pushed down forward by the front guide.

Therefore, in the present embodiment, as shown in FIG. 13, it is possible to reduce the occurrence of the grass or lawn which is not mown completely when the mower is advanced and mowing operation is performed by making each height from the ground with respect to each lower end position of the front guide at each position of the first position 41, the second position 42, and the third position 43 higher than each height from the ground with respect to the first rotating blade 21, the second rotating blade 22, and the third rotating blade 23.

In the present embodiment, since the front part 29a of the protector 29 curves to an inner side with respect to the horizontal direction, the grass or lawn is not caught in a space between the protector 29 and the mower deck 20, and as a result, it is possible to prevent grass or lawn from dropping from the space after mowing operation is performed. In case that the front part 29a of the protector 29 is not formed so as to curve to the inner side with respect to the horizontal direction, the mower advances while catching the grass or lawn in the space between the protector and the mower deck, and as a result, the grass or lawn is torn, and appearance of the place may worsen. However, according to the configuration of the protector 29 of the present embodiment, it is possible to prevent the problem from occurring. Further, since the protector 29 covers each fore end portion at the both sides of the mower deck 20, which collides with an obstacle most easily, it is possible to protect the mower deck 20. Even if the protector 29 collides with the obstacle and is bent, it is possible to reduce the damage to the mower deck 20 because there are few direct shocks to the body of the mower deck 20. Incidentally, if there is no case where grass or lawn is caught with the space between the protector 29 and the mower deck 20, for example in the case of mowing operation of the lawn, the front part of the protector 29 may be curved to an upward rather than to the inner side with respect to the horizontal direction, or the curved front part may not be provided at the protector.

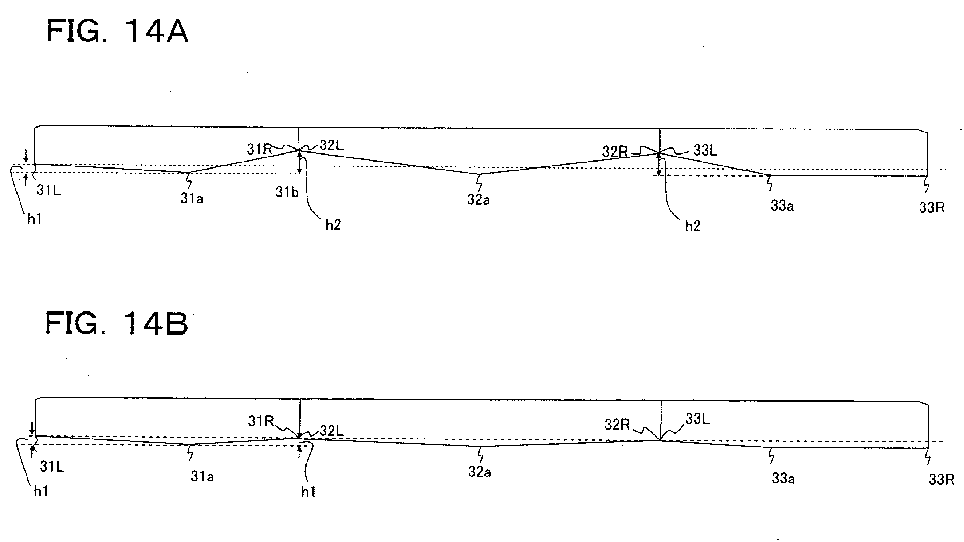

By the way, in the present embodiment, the first position of first front guide 31b, where the gradual change of the protruding distance from the top plate 20a changes into the sudden change, is formed on the first front guide 31. However, the first front guide 31 may be formed so that the protruding distance, which has protruded from the top plate 20a with respect to the portion between the foremost part of first front guide 31a and the first front guide right end 31R without the first position of first front guide 31 b, becomes short gradually and gently along the opposite direction to the rotational direction of the first rotating blade 21. The same can apply to the second front guide 32 and the third front guide 33, and the position, where the gradual change of the protruding distance from the top plate 20a changes into the sudden change, may not be provided at the second front guide 32 and/or the third front guide 33. The development view of an example of a front guide having such configuration is shown in FIG. 14A.

The position, where the gradual change of the protruding distance from the top plate 20a changes into the sudden change, may not be provided at the first front guide 31, the second front guide 32 and/or the third front guide 33. And then, the first front guide 31, the second front guide 32, and the third front guide 33 may be formed so that each protruding distance, which has protruded from the top plate 20a with respect to each portion of the first front guide right end 31 R, the second front guide left end 32L, the second front guide right end 32R, and the third front guide left end 33L, becomes short about 20 mm compared with each protruding distance, which has protruded from the top plate 20a with respect to the foremost part of first front guide 31 a, the foremost part of second front guide 32a, and the foremost part of third front guide 33a. In other words, the first front guide 31, the second front guide 32, and the third front guide 33 may be formed so that each protruding distance, which has protruded from the top plate 20a with respect to each portion of the first front guide right end 31 R, the second front guide left end 32L, the second front guide right end 32R, and the third front guide left end 33L, becomes the same distance as the protruding distance from the top plate 20a with respect to the first front guide left end 31 L. The development view of an example of a front guide having such configuration is shown in FIG. 14B.

In the above described embodiment, a case where three rotating blades are provided has been described that. However, the present invention is not limited to this configuration. For instance, the mower unit may be provided with one rotating blade. In this case, the front guide is formed so that the protruding distance, which has protruded from the top plate 20a with respect to an end part of the front guide corresponding to the side where the tip of the rotating blade approaches from rearward, becomes shorter than the distance from the top plate 20a with respect to the rotating blade.

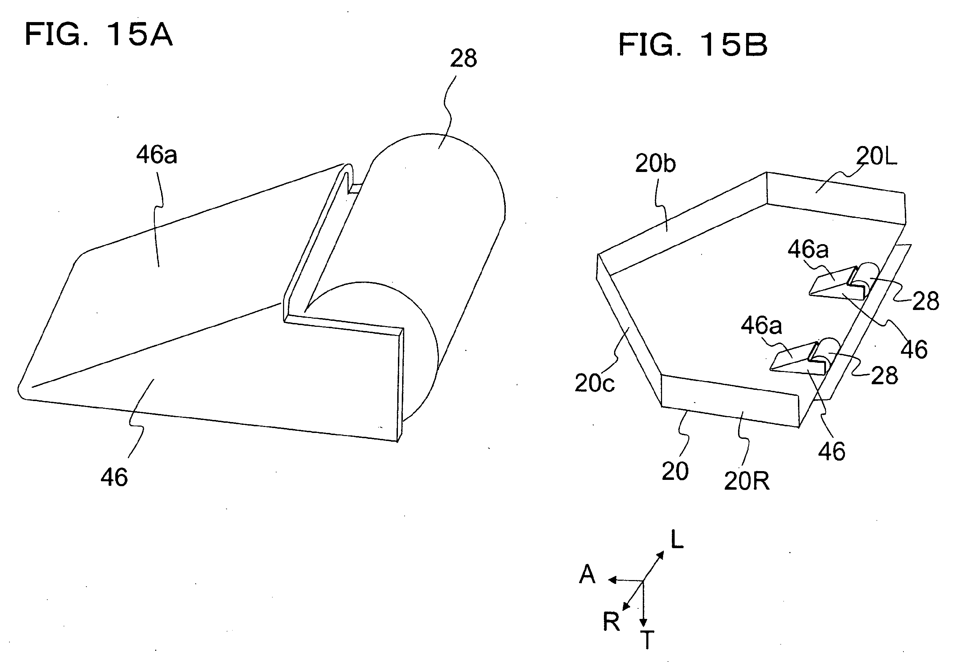

In the above described embodiment, a case where the inside rear roller 28 located in the mower deck 20 is rotatably disposed at a bracket 45 (see FIG. 4), which is disposed so that a front side 45a of the bracket 45 is provided to stand, has been described that. However, the present invention is not limited to this configuration. For instance, the inside rear roller 28 may be rotatably disposed at a sloping bracket 46 which is provided with a slope 46a that is substituted for the front side 45a, as shown in FIG. 15A. As shown in FIG. 15B, such a sloping bracket 46 is disposed so that the slope 46a faces to downward (to the ground side, in case of FIG. 1), and as a result, it is possible to prevent the grass or lawn from being held in the bracket because the grass or lawn slips on the slope 46a of the sloping bracket 46.

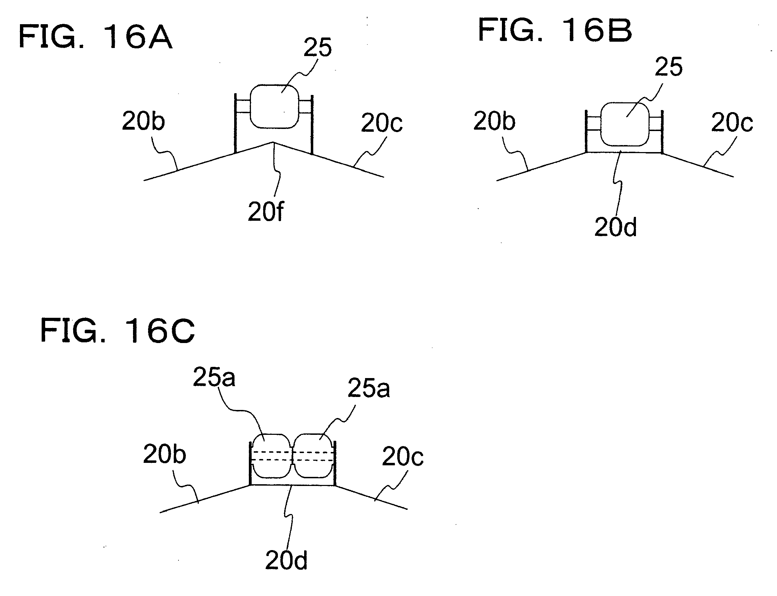

In the above described embodiment, as shown in FIG. 16A, a case where the front center roller 25 is disposed at fore side of a front end portion 20f which is formed by a front left wall part 20b and a front right wall part 20c has been described that. However, the present invention is not limited to this configuration. For instance, the front center roller 25 may be disposed so as to perform the configuration shown in FIG. 16B. Here, FIG. 16B shows the configuration in which a front wall 20d, that is formed in left-and-right direction between the front left wall part 20b and the front right wall part 20c, is formed. The front center roller 25 is disposed in parallel with the front wall 20d.

In case of the configuration shown in FIG. 16A, the lawn may be damaged or it may be removed due to the corner of the front end portion 20f. However, in case of the configuration shown in FIG. 16B, it is possible to reduce the damage or removing of the lawn because there is not a corner at the tip portion.

Further, in case of the configuration shown in FIG. 16B, it is possible to shorten the full length of the mower unit 2 compared with the configuration shown in FIG. 16A because the front center roller 25 can be disposed at the position that is nearer to the mower deck 20. Incidentally, the present invention is not limited to the configuration of the front center roller 25 shown in FIGS. 16A and 16B. For instance, as shown in FIG. 16C, two separated roller parts 25a may be disposed in place of the front center roller 25.

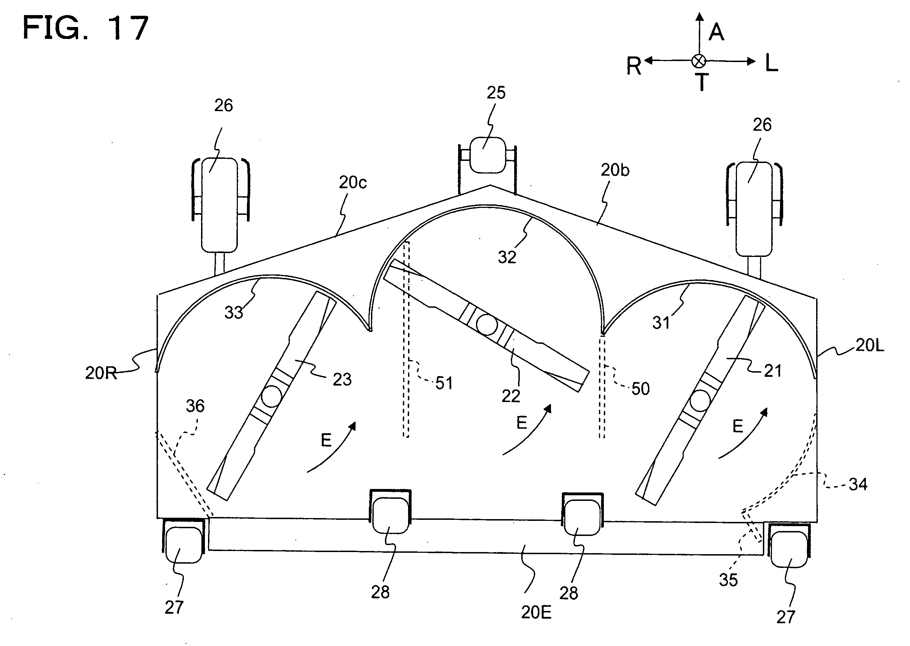

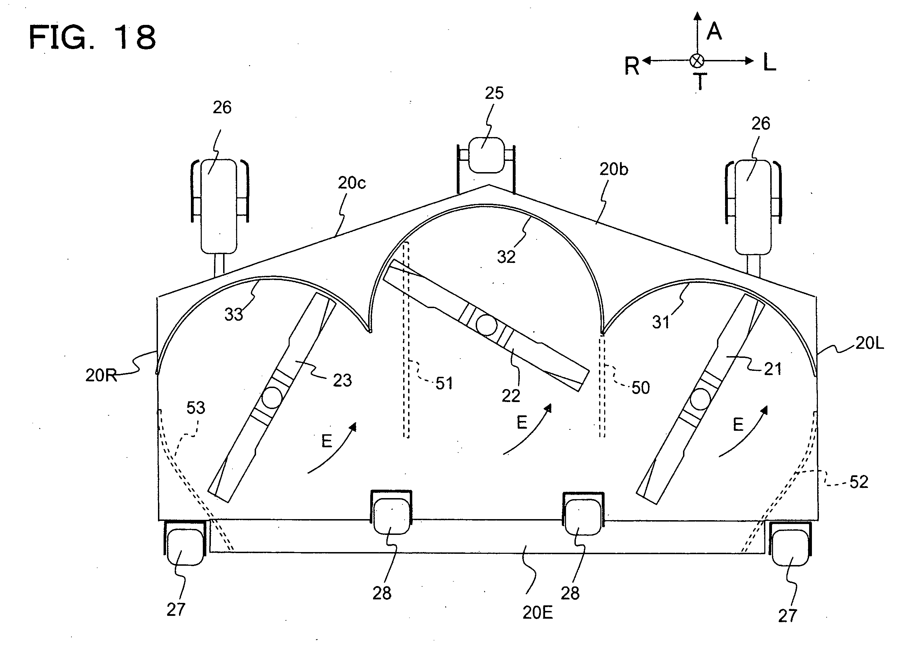

FIG. 17 is a schematic view seen from the bottom side of the mower deck according to the present embodiment, and shows the configuration of guides. As shown in FIG. 17, the mower unit 2 according to the present embodiment is provided with the first front guide 31, the second front guide 32, the third front guide 33, the curved shape-guide 34, the first inclined guide 35, the second inclined guide 36, the first liner guide 50, and the second liner guide 51. The curved shape-guide 34, the first inclined guide 35, the second inclined guide 36, the first liner guide 50, and the second liner guide 51 are detachably disposed, and the guides of other shape may be disposed in place of them. In FIG. 17, the detachable guides are denoted by dotted line. The same applies to the following drawings of FIGS. 18 to 20.

For example, FIG. 18 is a schematic view seen from the bottom side of the mower deck provided with a left rear part guide 52 and a right rear part guide 53 in place of the curved shape-guide 34, the first inclined guide 35, and the second inclined guide 36. The left rear part guide 52 is formed so as to continue from the inside of the left wall part 20L of the mower deck 20 to the rear end part 20E. The right rear part guide 53 is formed so as to continue from the inside of the right wall part 20R of the mower deck 20 to the rear end part 20E.

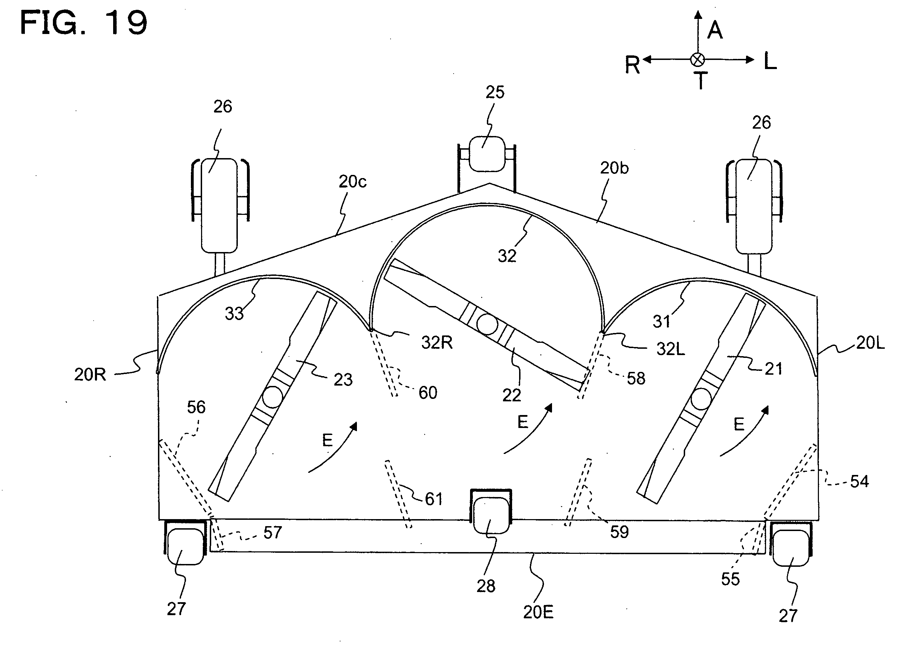

As shown in FIG. 19, a third inclined guide 54, a fourth inclined guide 55, a fifth inclined guide 56, a sixth inclined guide 57, a seventh inclined guide 58, a eighth inclined guide 59, a ninth inclined guide 60, and a tenth inclined guide 61 in place of the first liner guide 50, the second liner guide 51, the left rear part guide 52 and the right rear part guide 53. The third inclined guide 54 is disposed at the rear side of the first rotating blade 21 so as to continue from the inside of the left wall part 20L of the mower deck 20 to the right backward, and the fourth inclined guide 55 is disposed so as to continue between the rear end part of the third inclined guide 54 and the rear end part 20E of the mower deck 20 and to get toward the right back. The fifth inclined guide 56 is disposed at the rear side of the third rotating blade 23 so as to continue from the inside of the right wall part 20R of the mower deck 20 to the left backward, and the sixth inclined guide 57 is disposed so as to continue between the rear end part of the fifth inclined guide 56 and the rear end part 20E of the mower deck 20 and to get toward the left back. The seventh inclined guide 58 is disposed so as to continue from the second front guide left end 32L to the right backward, and the eighth inclined guide 59 is disposed backward of the seventh inclined guide 58 with the predetermined gap so as to incline and to get toward the right back. The ninth inclined guide 60 is disposed so as to continue from the second front guide right end 32R to the left backward, and the tenth inclined guide 61 is disposed backward of the ninth inclined guide 60 with the predetermined gap so as to incline and to get toward the left back. Incidentally, in the configuration shown in FIG. 19, in order to prevent interference due to the eighth inclined guide 59 and the tenth inclined guide 61, one inside rear roller 28 is disposed at the center in place of the pair of left and right inside rear rollers 28. The inside rear roller 28 is also detachably constructed between the positions shown in FIGS. 18 and 19.

Because of the configuration of the detachable guide as described above, it is possible to perform the mowing operation by using the optimal guide according to the state of the grass or lawn.

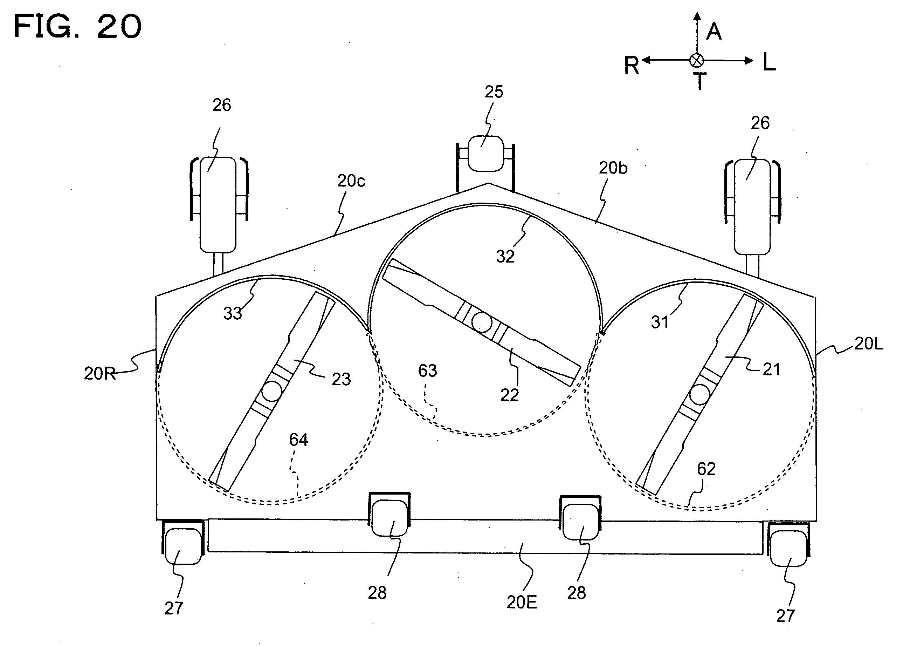

As shown in FIG. 20, an arc-shaped first rear guide 62 may be disposed at the rear side of the first front guide 31 so as to surround the first rotating blade 21, an arc-shaped second rear guide 63 may be disposed at the rear side of the second front guide 32 so as to surround the second rotating blade 22, and an arc-shaped third rear guide 64 may be disposed at the rear side of the third front guide 33 so as to surround the third rotating blade 23. Because of the configuration of the rear guide as described above, it is possible to perform a mulching operation.

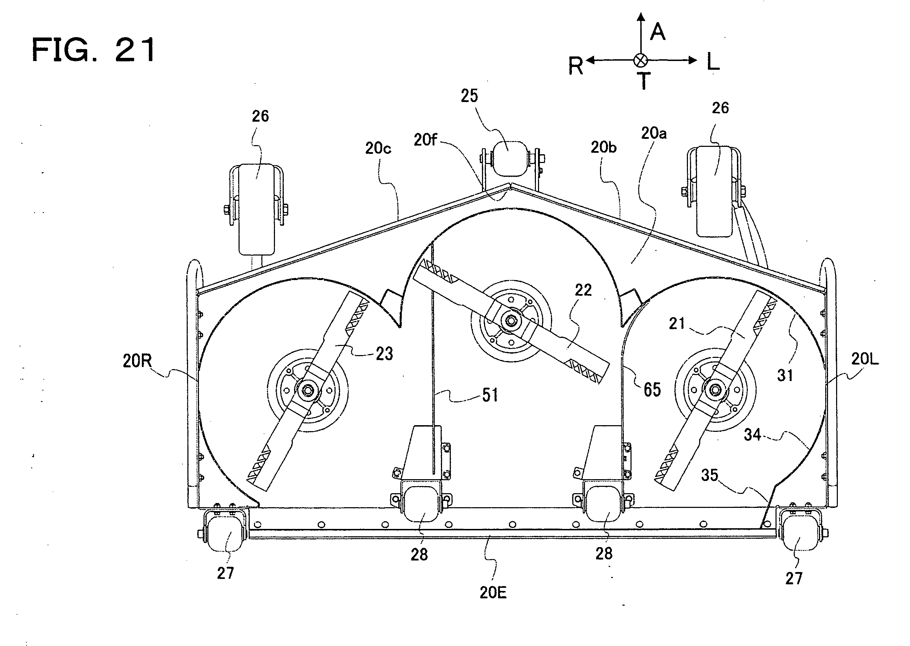

FIG. 21 shows a modified example of configuration shown in FIG. 4. In FIG. 21, parts of reference numerals are omitted because FIG. 21 and FIG. 4 are almost the same except that the form of a front curved shape-guide 65 is different from the first liner guide 50. The front curved shape-guide 65 is constructed so that the front end of a circularly curved front part of the front curved shape-guide 65 is attached to the rear face of the first front guide 31 and the tip of a liner shaped rear part thereof is directed backward.

A mower unit according to the present invention is capable of effectively reducing the occurrence of the grass or lawn which is not mown completely, and are useful for a mower unit which is mounted on a riding type mower, for example.

## Claims

1. A mower unit (2) comprising:
a blade (21, 22, 23) which cuts grass or lawn while rotating; and
a guide (31, 32, 33) which is formed along a rotational locus of the blade and
is disposed at a fore side of the rotational locus of the blade (21, 22, 23), **characterized in that** a lower end position of a part of the guide (31L-31a, 32b-32a, 33b-33a) is constructed more highly than a tip position of the blade (21, 22, 23), the part of the guide (31L-31a, 32b-32a, 33b-33a) corresponding to a first region that is a part of the rotational locus, which exists within such a range from a position where a tip of the blade (21, 22, 23) moves in a progressing direction of the mower unit (2) and in parallel with the progressing direction, to another position where the tip of the blade (21, 22, 23) moves in an orthogonal direction which intersects orthogonally with the progressing direction of the mower unit (2), and
the guide (31, 32, 33) is constructed so that a height of the lower end position of the part of the guide (31L-31a, 32b-32a, 33b-33a) becomes low gradually along a rotational direction of the blade.

2. The mower unit according to claim 1, wherein
the guide (33) is constructed so that a height of a lower end position of another part of the guide (33a-33R) is same or substantially same along the rotational direction of the blade (23), said another part of the guide (33a-33R) corresponding to a second region that is another part of the rotational locus, which exists within such a range from a position where the tip of the blade (23) moves in the orthogonal direction, to another position where the tip of the blade (23) moves in an opposite direction to the progressing direction of the mower unit (2).

3. The mower unit according to claim 2, wherein
a set of the blade (23) and the guide (33) is provided in a right side end of the mower unit (2), and two or more sets of other blade (21, 22) and other guide (31, 32) are provided in a left side of the guide (33) provided in the right side end, and the sets adjoin in a transverse direction to the progressing direction of the mower unit (2), and
all of the other guides (31, 32) except for the guide (33) provided in the right side end are disposed at fore sides of the rotational locus of the other blades (21, 22), and i) are constructed so that a height of a lower end position of a part of each one of the other guides (31 L-31a, 32b-32a) becomes low gradually along each rotational direction of the other blades (21, 22), the part of each one of the other guides (31 L-31a, 32b-32a) corresponding to the first region of the rotational locus, and ii) are constructed so that a height of a lower end position of another part of each one of the other guides (31a-31b, 32a-32c) becomes high gradually along each rotational direction of the other blades (21, 22), said another part of each one of the other guides (31a-31b, 32a-32c) corresponding to the second region of the rotational locus.

4. The mower unit according to claim 1, wherein
three or more sets of the blade (21, 22, 23) and the guide (31, 32, 33) are provided, and the sets adjoin in a transverse direction to the progressing direction of the mower unit (2), and
all of the guides (31, 32) except for a right side end guide (33) are constructed so that a height of a lower end position of another part of the each guide (31a-31b, 32a-32c) becomes high gradually along the rotational direction of the blade, said another part of the each guide (31a-31b, 32a-32c) corresponding to a second region that is another part of the rotational locus, which exists within such a range from a position where the tip of the blade (21, 22) moves in the orthogonal direction, to another position where the tip of the blade (21, 22) moves in an opposite direction to the progressing direction of the mower unit (2).

## Patentansprüche

1. Mäheinheit (2) mit:
einem Messer (21, 22, 23), das bei Drehung Gras oder Rasen schneidet; und
einer Führung (31, 32, 33), die entlang einer Rotationsortslinie des Messers ausgebildet ist und an einer Vorderseite der Rotationsortslinie des Messers (21, 22, 23) angeordnet ist,
**dadurch gekennzeichnet, dass**
eine untere Endposition eines Teils der Führung (31 L-31 a, 22b-32a, 33b-33a) im Aufbau höher ist als eine Position der Spitze des Messers (21, 22, 23), wobei der Teil der Führung (31 L-31 a, 32b-32a, 33b-33a) einem ersten Gebiet entspricht, das ein Teil der Rotationsortslinie ist, der innerhalb eines Bereiches von einer Position, an der eine Spitze des Messers (21, 22, 23) sich in einer Fortbewegungsrichtung der Mäheinheit (2) und parallel zur Fortbewegungsrichtung bewegt, zu einer weiteren Position besteht, an der die Spitze des Messers (21, 22, 23) sich in einer senkrechten Richtung bewegt, die die Fortbewegungsrichtung der Mäheinheit (2) senkrecht schneidet, und
die Führung (31, 32, 33) so aufgebaut ist, dass eine Höhe der unteren Endposition des Teils der Führung (31L-31a, 32b-32a, 33b-33a) graduell entlang einer Drehrichtung des Messers klein wird.

2. Mäheinheit nach Anspruch 1, wobei
die Führung (33) so aufgebaut ist, dass eine Höhe einer unteren Endposition eines weiteren Teils der Führung (33a-33R) gleich oder im Wesentlichen gleich entlang der Drehrichtung des Messers (23) ist, wobei der weitere Teil der Führung (33a-33R) einem zweiten Gebiet entspricht, das ein weiterer Teil der Rotationsortslinie ist, der in einem Bereich von einer Position, an der die Spitze des Messers (23) sich in der senkrechten Richtung bewegt, zu einer weiteren Position besteht, an der die Spitze des Messers (23) sich in einer zur Fortbewegungsrichtung der Mäheinheit (2) entgegengesetzten Richtung bewegt.

3. Mäheinheit nach Anspruch 2, wobei
eine aus dem Messer (23) und der Führung (33) bestehende Gruppe an einem auf der rechten Seite liegenden Ende der Mäheinheit (2) vorgesehen ist, und zwei oder mehr Gruppen aus einem anderen Messer (21, 22) und einer anderen Führung (31, 32) auf einer linken Seite der Führung (33), die an dem auf der rechten Seite liegenden Ende vorgesehen ist, bereitgestellt sind, und wobei sich die Gruppen in einer Querrichtung zur Fortbewegungsrichtung der Mäheinheit (2) vereinigen, und alle anderen Führungen (31, 32) mit Ausnahme der Führung (33), die an dem auf der rechten Seite liegenden Ende vorgesehen sind, an vorderen Seiten der Rotationsortslinie der anderen Messer (21, 22) angeordnet sind, und so aufgebaut sind, dass i) eine Höhe einer unteren Endposition eines Teils jeweils der anderen Führungen (31 L-31 a, 32b-32a) graduell entlang jeder Drehrichtung der anderen Messer (21, 22) niedrig wird, wobei der Teil jeder der anderen Führungen (31 L-31 a, 32b-32a) dem ersten Gebiet der Rotationsortslinie entspricht, und ii) eine Höhe einer unteren Endposition eines weiteren Teils jeder der anderen Führungen (31 a-31 b, 32a-32c) graduell entlang jeder Drehrichtung der anderen Messer (21, 22) hoch wird, wobei der weitere Teil jeder der anderen Führungen (31 a-31 b, 32a-32c) dem zweiten Gebiet der Rotationsortslinie entspricht.

4. Mäheinheit nach Anspruch 1, wobei
drei oder mehr Gruppen aus dem Messer (21, 22, 23) und der Führung (31, 32, 33) vorgesehen sind, und die Gruppen in einer Querrichtung in Bezug zur Fortbewegungsrichtung der Mäheinheit (2) zusammenlaufen, und
alle Führungen (31, 32) mit Ausnahme der Führung an dem Ende der rechten Seite (33) so aufgebaut sind, dass eine Höhe einer unteren Endposition eines weiteren Teils jeder Führung (31a-31b, 32a-32c) graduell entlang der Drehrichtung des Messers hoch wird, wobei der weitere Teil jeder Führung (31 a-31 b, 32a-32c) einem zweiten Gebiet entspricht, das ein weiterer Teil der Rotationsortslinie ist, der innerhalb eines Bereiches von einer Position, an der die Spitze des Messers (21, 22) sich in der senkrechten Richtung bewegt, zu einer weiteren Position besteht, an der die Spitze des Messers (21, 22) sich in einer zur Fortbewegungsrichtung der Mäheinheit (2) entgegengesetzten Richtung bewegt.

## Revendications

1. Unité de tondeuse (2) comprenant :
une lame (21, 22, 23) qui coupe l'herbe ou le gazon en tournant ; et
un guide (31, 32, 33) qui est formé autour du lieu de rotation de la lame, et est disposé du côté avant du lieu de rotation de la lame (21, 22, 23),
**caractérisée en ce que**
la position d'extrémité inférieure d'une partie du guide (31L-31a, 32b-32a 33b-33a) est construite plus haute que la position d'extrémité de la lame (21, 22, 23), la partie du guide (31L-31a, 32b-32a 33b-33a) correspondant à une première région qui fait partie du lieu de rotation, qui existe dans une plage allant d'une position où une extrémité de la lame (21, 22, 23) se déplace dans la direction d'avancement de l'unité de tondeuse (2) et en parallèle avec la direction d'avancement, jusqu'à une autre position où l'extrémité de la lame (21, 22, 23) se déplace dans une direction orthogonale qui coupe orthogonalement la direction d'avancement de l'unité de tondeuse (2), et
le guide (31, 32, 33) est construit de sorte que la hauteur de la position d'extrémité inférieure de la partie du guide (31L-31a, 32b-32a 33b-33a) diminue progressivement dans la direction de rotation de la lame.

2. Unité de tondeuse selon la revendication 1, dans laquelle
le guide (33) est construit de sorte que la hauteur de la position d'extrémité inférieure d'une autre partie du guide (33a-33R) est la même ou sensiblement la même dans la direction de rotation de la lame (23), ladite autre partie du guide (33a-33R) correspondant à une seconde région qui est une autre partie du lieu de rotation, qui existe dans une plage allant d'une position où l'extrémité de la lame (23) se déplace dans la direction orthogonale, jusqu'à une autre position où l'extrémité de la lame (23) se déplace dans une direction opposée à la direction d'avancement de l'unité de tondeuse (2).

3. Unité de tondeuse selon la revendication 2, dans laquelle
un ensemble constitué de la lame (23) et du guide (33) est prévu à l'extrémité droite de l'unité de tondeuse (2), et au moins deux ensembles constitués d'une autre lame (21, 22) et d'un autre guide (31, 32) sont prévus du côté gauche du guide (33) disposé à l'extrémité droite, et les ensembles sont reliés dans la direction transversale par rapport à la direction d'avancement de l'unité de tondeuse (2), et
tous les autres guides (31, 32) à l'exception du guide (33) prévu à l'extrémité droite sont disposés sur les côtés avant du lieu de rotation des autres lames (21, 22) et i) sont construits de sorte que la hauteur de la position d'extrémité inférieure d'une partie de chacun des autres guides (31L-31a, 32b-32a) diminue progressivement dans chaque direction de rotation des autres lames (21, 22), la partie de chacun des autres guides (31L-31a, 32b-32a) correspondant à la première région du lieu de rotation et ii) sont construits de sorte que la hauteur de la position d'extrémité inférieure d'une autre partie de chacun des autres guides (31a-31b, 32a-32c) augmente progressivement dans chaque direction de rotation des autres lames (21, 22), ladite autre partie de chacun des autres guides (31a-31b, 32a-32c) correspondant à la seconde région du lieu de rotation.

4. Unité de tondeuse selon la revendication 1, dans laquelle
au moins trois ensembles constitués de la lame (21, 22, 23) et du guide (31, 32, 33) sont prévus, et les ensembles se rejoignent dans la direction transversale par rapport à la direction d'avancement de l'unité de tondeuse (2), et
tous les guides (31, 32) à l'exception du guide d'extrémité droite (33) sont construits de sorte que la hauteur de la position d'extrémité inférieure d'une autre partie de chaque guide (31a-31b, 32a-32c) augmente progressivement dans la direction de rotation de la lame, ladite autre partie de chaque guide (31a-31b, 32a-32c) correspondant à une seconde région qui constitue une autre partie du lieu de rotation, qui existe dans une plage allant d'une position où l'extrémité de la lame (21, 22) se déplace dans la direction orthogonale, jusqu'à une autre position où l'extrémité de la lame (21, 22) se déplace dans une direction opposée à la direction d'avancement de l'unité de tondeuse (2).
